Europäisches Patentamt

(19) European Patent Office

Office européen des brevets

(11) Numéro de publication: **0 147 885**
**A1**

(12) **DEMANDE DE BREVET EUROPEEN**

(21) Numéro de dépôt: **84201815.2**

(22) Date de dépôt: **06.12.84**

(51) Int. Cl.⁴: **B 22 D 11/16**
**G 01 K 1/16, G 01 K 1/14**
**G 01 J 5/04**

(30) Priorité: **14.12.83 BE 6047913**

(43) Date de publication de la demande:
**10.07.85 Bulletin 85/28**

(84) Etats contractants désignés:
**AT CH DE FR GB IT LI LU NL SE**

(71) Demandeur: **CENTRE DE RECHERCHES
METALLURGIQUES CENTRUM VOOR RESEARCH IN DE
METALLURGIE Association sans but lucratif
Vereniging zonder winstoogmerk Rue Montoyer, 47
B-1040 Bruxelles(BE)**

(72) Inventeur: **Ramelot, Daniel Léon
8, rue du Champay
B-4310 St-Nicolas(BE)**

(74) Mandataire: **Lacasse, Lucien Emile et al,
CENTRE DE RECHERCHES METALLURGIQUES Abbaye
du Val-Benoît 11, rue Ernest Solvay
B-4000 Liège(BE)**

(54) Procédé de nettoyage d'une surface métallique chaude en mouvement.

㊞ Pendant l'opération de nettoyage, on mesure en continu la distance entre le point de contact du racleur avec la surface et un point de référence, de préférence fixe, et on engendre un signal S représentatif de cette distance (courbe a). A intervalles de temps prédéterminés, de préférence réguliers, on détermine la valeur moyenne du signal S pendant la durée du dit intervalle et on détecte l'écart $\Delta S$ entre la valeur instantanée du signal S au cours d'un intervalle et la valeur moyenne de ce même signal S correspondant à l'intervalle précédent (courbe b). Lorsque le dit écart atteint une valeur prédéterminée, par exemple $\pm$ 1 mm (en $T_2$, $T_3$, courbe b), on retire le racleur en arrière puis, après un laps de temps prédéterminé, qui peut être égal à la durée d'au moins un des dits intervalles, on ramène le racleur en contact avec la dite surface (courbe c).

EP 0 147 885 A1

./...

Fig. 2

- 1 -

## Procédé de nettoyage d'une surface métallique chaude en mouvement.

La présente invention concerne un procédé de nettoyage d'une surface métallique chaude en mouvement, notamment en vue de la mesure de la température de cette surface. Elle s'applique en particulier, sans toutefois y être limitée, à un produit en acier en défilement continu, par exemple une brame d'acier obtenue par coulée continue.

On sait que la conduite de la fabrication d'un produit métallique à chaud ne peut être assurée de façon correcte que si l'opérateur connaît la valeur des différents paramètres régissant cette opération. Dans de nombreux cas, la température de surface constitue un paramètre important qu'il convient de pouvoir mesurer de façon fiable et reproductible. Cependant, cette mesure de température est souvent rendue difficile par la présence d'une couche d'oxydes à la surface du produit métallique chaud.

Par son brevet belge n° 840.761, le present demandeur a déjà proposé un procédé et un dispositif permettant de réaliser la mesure désirée. Ce dispositif connu se compose principalement d'un pyromètre optique associé à un appareil de raclage de la plage du produit dont on désire mesurer la température. Cet appareil comporte un arbre rotatif dont une extrémité est munie d'un organe portant un ou plusieurs racleurs; ceux-ci sont appliqués, avec une pression réglable, sur la surface à nettoyer, le nettoyage désiré étant assuré par la rotation de l' arbre porteur.

Ce dispositif fonctionne de façon satisfaisante, aussi longtemps que la surface à nettoyer reste relativement régulière. Il est cependant fréquent que des produits de ce type présentent des fissures ou des criques superficielles, de dimensions diverses, dans lesquelles les racleurs de nettoyage peuvent s'engager sous l'action de leur pression d'application. Le mouvement de défilement du produit peut alors provoquer l'entraînement des racleurs et causer ainsi des dommages importants, soit aux racleurs eux-mêmes, soit même à l'arbre porteur.

La présente invention se propose d'éliminer cet inconvénient en veillant à ce que les racleurs ne soient pas entraînés par les fissures ou criques superficielles dans lesquelles ils pourraient s'engager.

Un autre objet de l'invention est de révéler un procédé permettant de réagir à toute irrégularité brusque de la surface, tout en restant insensible aux variations lentes du profil longitudinal de cette même surface. Par variations lentes, il faut entendre ici celles qui, compte tenu de la vitesse de défilement du produit, ne donnent pas lieu à un déplacement brusque des racleurs; il s'agit par exemple, d'ondulations de grande longueur d'onde dépendant de la température et de la composition chimique du produit, ainsi que de l'état mécanique de la machine de coulée, et notamment des rouleaux supportant le produit.

A cet effet, le procédé de nettoyage d'une surface métallique chaude en mouvement, à l'aide d'au moins un racleur prenant appui sur cette surface, qui fait l'objet de la présente invention, est essentiellement caractérisé en ce que :

(a) on mesure en continu la distance entre le point de contact du dit racleur avec la surface et un point de référence, et on engendre un signal S représentatif de cette distance;

(b) à intervalles de temps prédéterminés, de préférence réguliers, on détermine la valeur moyenne du signal S pendant la durée du dit intervalle ($T_n$);

(c) on détecte l'écart entre la valeur instantanée du signal S au cours d'un intervalle $T_n$ et la valeur moyenne de ce même signal S correspondant à l'intervalle précédent ($T_{n-1}$), cet écart étant désigné par $\Delta S$;

(d) on ramène le dit racleur en arrière, lorsque le dit écart atteint une valeur prédéterminée (E);

(e) après un laps de temps prédéterminé, qui peut être égal à la durée d'au moins un des dits intervalles, on ramène le dit racleur en contact avec la dite surface.

Dans le cadre de l'invention, il s'est avéré intéressant de choisir un point de référence fixe, situé par exemple sur le bâti supportant l'arbre qui porte le dit racleur.

Selon l'invention, la durée des dits intervalles est choisie suffisamment courte pour que le dépassement du dit écart au cours d'un intervalle corresponde à l'entrée du dit racleur dans une fissure ou une crique superficielle.

Egalement selon l'invention, on effectue la séquence d'opérations (a) à (e) de façon automatique.

En particulier, cette séquence d'opérations est commandée par un microprocesseur.

Selon une mise en oeuvre particulière du procédé de l'invention, on mesure la dite distance en détectant les déplacements longitudinaux de l'arbre porte-racleur par rapport au dit point de référence.

Dans le cadre de cette mise en oeuvre, il est cependant apparu que certains sytèmes de manoeuvre du dit racleur réagissaient avec un léger retard à la commande de retrait consécutive à la détection d'un défaut . Il s'agit en particulier des systèmes pneumatiques, qui peuvent avoir un temps de réponse de l'ordre de 0,5 seconde.

Cette durée peut être suffisante pour que le racleur se soit engagé dans une crique et que l'avance du produit ait causé des dommages au racleur ou à l'arbre qui le porte.

Pour remédier à cet inconvénient possible, on utilise, selon une mise en oeuvre particulière de la présente invention, un dispositif de nettoyage comportant une tête de raclage articulée.

Pour cette mise en oeuvre, on utilise un dispositif comprenant un arbre rotatif pourvu à une extrémité d'au moins un racleur destiné à entrer en contact avec la surface à nettoyer et dans lequel :

- 5 -                    0147885

(a) le dit arbre est creux;

(b) le dit arbre porte, à la dite extrémité, un organe mobile pouvant pivoter par rapport au dit arbre et portant le dit racleur;

(c) dans le dit arbre creux est logée une tige, mobile en direction longitudinale, qui prend appui par une extrémité sur la face arrière du dit organe mobile et par son autre extrémité sur un support élastique de préférence logé dans le dit arbre creux;

(d) il est prévudes moyens de réglage de l'effort longitudinal appliqué à la tige par le dit support élastique.

Egalement suivant l'invention, on utilise un dispositif comportant encore des moyens destinés à limiter le déplacement par pivotement du dit organe mobile entre une position de travail et une position de retrait, ces positions pouvant elles-mêmes être ajustées par des moyens de réglage appropriés.

Selon une autre caractéristique de l'invention, on peut utiliser un dispositif comportant en outre des moyens pour refroidir et balayer l'espace compris entre le dit arbre creux et la dite tige.

L'utilisation d'un tel dispositif articulé augmente encore l'intérêt du procédé décrit plus haut. Outre qu'il réduit l'effort transversal appliqué à l'arbre porteur, le pivotement de la tête de raclage provoque une avance sensible de l'arbre porteur du racleur, avance qui peut être détectée sans retard et entraîner la commande immédiate du retrait du racleur.

Selon une autre modalité de mise en oeuvre, on mesure la dite distance en détectant la position instantanée de la surface en amont et aussi près que possible du dit racleur, au moyen d'au moins un capteur approprié.

Cette modalité de mise en oeuvre apparaît particulièrement avantageuse, car elle permet d'éviter tout risque de pénétration du racleur dans une crique et par conséquent tout risque de dommage au racleur ou à l'arbre porteur.

On va maintenant décrire en détail un exemple de mise en oeuvre de l'invention en se référant aux dessins annexés, dans lesquels :

- la Fig.1   représente schématiquement un dispositif de nettoyage, avec son circuit de commande de déplacement;

- la Fig.2   illustre graphiquement les différentes opérations constituant le procédé de l'invention;

- la Fig.3   représente schématiquement un dispositif de nettoyage comportant une tête de raclage articulée, qui permet la mise en oeuvre particulière de l' invention.

Le présent exemple, auquel il ne faut attribuer aucun caractère limitatif, porte sur le nettoyage de la surface d'une brame de coulée continue se déplaçant à une vitesse de 2 cm/s.

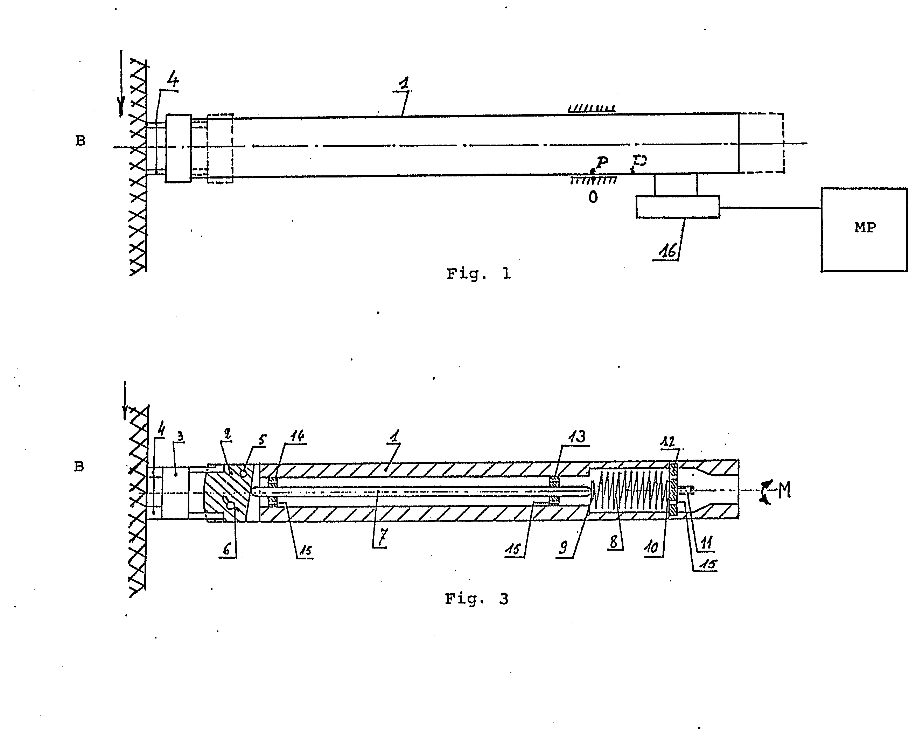

On a représenté schématiquement, à la Fig.1, une brame B de coulée continue se déplaçant, dans le sens de la flèche, devant un dispositif de nettoyage qui comprend une lance 1 et des racleurs 4 en contact avec la surface de la brame. Un capteur de déplacement 16 détecte les déplacements longitudinaux d'un point tel que P de la lance 1 par rapport à un point de référence fixe, par exemple le point O situé sur le bâti supportant la lance 1. Ce capteur de déplacement 16 émet un signal représentatif des déplacements longitudinaux de la lance 1 et il transmet ce signal à un microprocesseur

0147885

MP. A intervalles de temps réguliers de 10 secondes, le microprocesseur compare le signal réel fourni par le capteur de déplacement 16 avec une valeur de référence appropriée de la
position de la lance 1. Lorsque l'écart E entre la position
correspondant à ce signal réel et cette position de référence
dépasse en valeur absolue, une valeur prédéterminée, par exemple 1 mm dans le présent exemple, le microprocesseur commande
le retrait de la lance 1. Celle-ci est maintenue en position
de retrait (en trait interrompu) pendant 20 secondes, puis
elle est automatiquement ramenée en position de travail (en
trait plein), toujours par le microprocesseur, et le nettoyage reprend son cours.

Ces conditions traduisent l'hypothèse, confirmée par l'observation, que la présence d'un défaut tel qu'une crique ou une
saillie, à la surface de la brame provoque un déplacement longitudinal des racleurs, et par conséquent de la lance 1, de
plus de 1 mm en moins de 10 secondes. En revanche, les variations lentes naturelles, telles que des ondulations, de la
surface de la brame n'entraînent normalement pas le franchissement de cette limite. Par ailleurs, la durée de retrait de
20 secondes a toujours été suffisante, dans l'exemple considéré, pour que le défaut se retrouve hors de portée des racleurs 4.

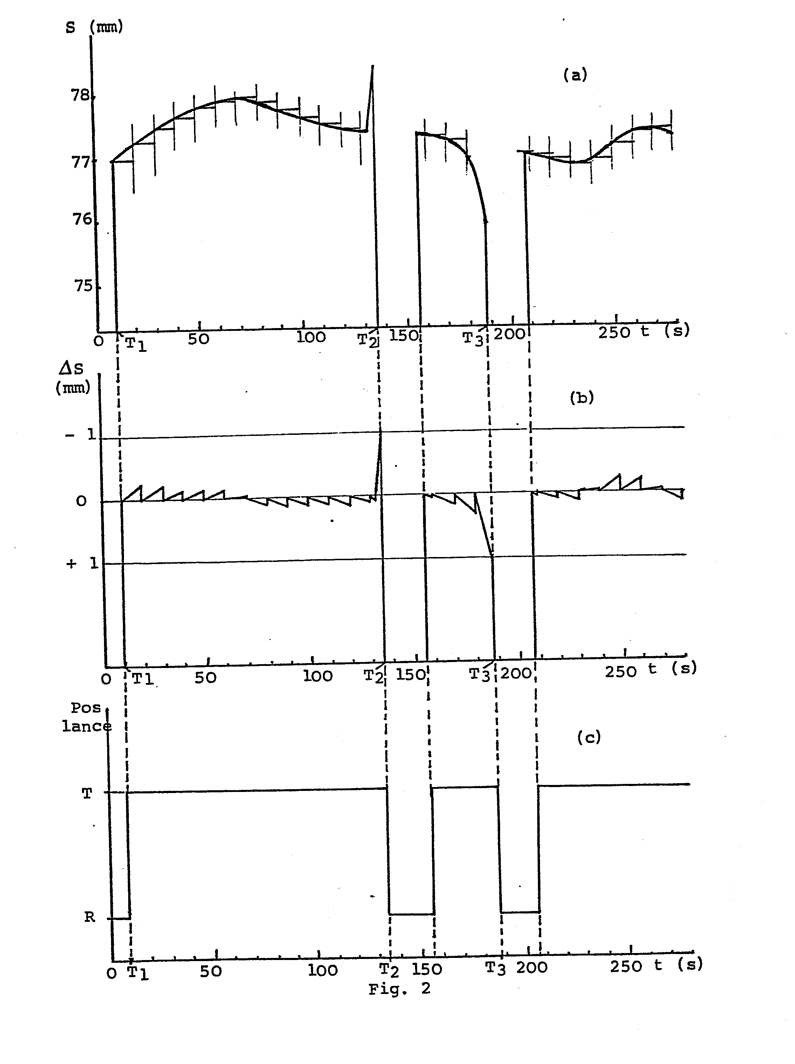

La Fig. 2 illustre graphiquement le processus qui vient d'être
décrit.

La courbe (a) montre l'évolution du signal S représentatif des
déplacements longitudinaux réels de la lance 1 en fonction du
temps t. Avant le début de l'opération de nettoyage, la lance
1 est en position de retrait, ce qui correspond, sur le diagramme (a) à un déplacement nul. A l'instant $T_1$ = 10 s par
exemple, le processus est mis en route et le microprocesseur
amène la lance en position de travail, avec ses racleurs en contact avec la surface de la brame. La lance suit l'évolution de la surface de la brame qui défile et la valeur instantanée du signal S est transmise au microprocesseur MP. Toutes les 10 secondes, celui-ci détermine la valeur moyenne de la position de la lance au cours de l'intervalle de 10 secondes écoulé et il compare en continu la valeur instantanée du signal S avec cette valeur moyenne. Aussi longtemps que l'écart constaté entre ces valeurs ne dépasse pas une limite préalablement fixée, qui est ici égale à 1 mm, il ne se passe rien et la lance reste, par les racleurs 4, en contact avec la surface de la brame.

Au contraire, lorsqu'il se présente un défaut tel qu'une crique dans laquelle les racleurs 4 peuvent s'engager, la lance subit un déplacement longitudinal, en direction de la brame, qui est supérieur à la limite de 1 mm et qui dure moins de 10 secondes. Le microprocesseur détecte ce déplacement excessif par rapport à la dernière valeur de référence déterminée, et il commande aussitôt le retrait de la lance. De même, lorsque les racleurs 4 rencontrent une saillie, tel qu'un gonflement suffisamment rapide de la surface de la brame, le microprocesseur commande également le retrait de la lance. Ces deux situations sont illustrées aux instants $T_2$ et $T_3$ des courbes de la Fig. 2. Dans les deux cas, la lance est maintenue en position de retrait pendant 20 secondes, puis elle est ramenée en position de travail.

La technique consistant à déterminer une nouvelle valeur de référence après chaque intervalle de temps permet d'éliminer l'effet des variations lentes de la surface de la brame et de tenir compte uniquement des variations brusques correspondant aux défauts. Elle est schématisée par la courbe (b) de la Fig. 2, où l'on a en fait reproduit la courbe (a), mais en ramenant à un même niveau la valeur de référence au début de chaque intervalle de temps, pour faire apparaître les $\Delta S$.

La courbe (c) exprime la commande des mouvements de mise en place et de retrait de la lance par le microprocesseur. Le niveau R indique que la lance est en position de retrait et le niveau T indique que la lance est en position de travail.

La figure 3 représente, schématiquement et non à l'échelle, un dispositif de nettoyage comportant une tête de raclage articulée, utilisée conformément à l'invention, avec une brame de coulée continue B.

Le dispositif comporte une lance constituée d'un arbre creux 1 pouvant être mis en rotation par un moteur M, qui n'est pas représenté. A son extrémité voisine de la brame B, cet arbre porte un organe 2 sur lequel est montée la tête 3 pourvue des racleurs 4. Cet organe 2 est articulé en 5 à l'extrémité de l'arbre creux 1. Il est en outre pourvu d'un système à boutonnière 6 limitant sa course en rotation. En position de travail, les racleurs prennent appui sur la surface de la brame.

L'organe articulé 2 présente une face arrière, inclinée par rapport à l'axe longitudinal de l'arbre 1, sur laquelle s'appuie, par une extrémité, une tige 7 logée à l'intérieur de l'arbre creux 1. Par son autre extrémité, la tige 7 s'appuie sur un support élastique constitué par un ressort 8. Ce ressort est lui-même pourvu de plaquettes d'extrémité 9 et 10, dont la première 9 vient en contact avec l'extrémité de la tige 7, et dont la seconde 10 repose sur une vis de réglage 11 logée dans une butée fixe 12. Cette vis est accessible par l'extrémité ouverte de l'arbre creux 1. Les pièces de guidage 12, 13 et 14 sont pourvues d'orifices 15 laissant passer le fluide refroidisseur.

Le dispositif fonctionne de la façon suivante.

La brame B se déplace dans le sens indiqué par la flèche. Aussi longtemps que la surface de la brame reste relativement régulière, les racleurs 4 restent bien en contact avec elle et assurent le nettoyage désiré. Lorsqu'il se présente une irrégularité par exemple une crique transversale d'une profondeur suffisante, les racleurs s'y engagent et sont entraînés sous l'effet du mouvement de la brame. L'effort transversal appliqué aux racleurs se transmet par l'intermédiaire de la tête 3, à l'organe articulé 2 qui pivote en repoussant la tige 7. Ce mouvement de l'organe articulé 2 provoque un effacement des racleurs 4 qui échappent ainsi à l'effort transversal et ne sont donc pas endommagés. Le déplacement de la tige 7 provoque une compression du ressort 8 aussi longtemps que dure l'effort transversal. Dès que cet effort disparaît, c'est-à-dire lorsque la surface de la brame redevient régulière, le ressort repousse la tige 7, l'organe pivotant 2, la tête 3 et les racleurs 4 dans leur position normale de travail. La vis 11 permet de régler la longueur du ressort 8 et par conséquent l'effort longitudinal qu'il exerce sur la tige 7 et en définitive la pression d'appui des racleurs sur la surface de la brame.

Le dispositif utilisé conformément à l'invention permet donc d'éviter tout endommagement des racleurs en présence d'une crique ou d'une aspérité importante. Il contribue à l'amélioration de la mesure de la température superficielle du produit considéré, ainsi qu'à l'accroissement de la durée de vie des racleurs et du dispositif tout entier.

- 11 -

0147885

Revendications.

1. Procédé de nettoyage d'une surface métallique chaude en mouvement, à l'aide d'au moins un racleur prenant appui sur cette surface, caractérisé en ce que :

(a) on mesure en continu la distance entre le point de contact du dit racleur avec la surface et un point de référence, et on engendre un signal S représentatif de cette distance;

(b) à intervalles de temps prédéterminés, de préférence réguliers, on détermine la valeur moyenne du signal S pendant la durée du dit intervalle;

(c) on détecte l'écart $\Delta S$ entre la valeur instantanée du signal S au cours d'un intervalle et la valeur moyenne de ce même signal S correspondant à l'intervalle précédent;

(d) on ramène le dit racleur en arrière lorsque le dit écart atteint une valeur prédéterminée;

(e) après un laps de temps prédéterminé, qui peut être égal à la durée d'au moins un des dits intervalles, on ramène le dit racleur en contact avec la dite surface.

2. Procédé suivant la revendication 1, caractérisé en ce que l'on choisit un point de référence fixe, situé par exemple sur le bâti supportant l'arbre qui porte le dit racleur.

3. Procédé suivant l'une ou l'autre des revendications 1 et 2, caractérisé en ce que l'on choisit une durée d'intervalle suffisamment courte pour que le dépassement du dit écart au cours d'un intervalle corresponde sans ambiguïté possible à l'entrée du dit racleur dans une crique ou une fissure superficielle.

4. Procédé suivant l'une ou l'autre des revendications 1 à 3, caractérisé en ce que l'on mesure la dite distance en détectant les déplacements longitudinaux de l'arbre porte racleur par rapport au dit point de référence.

5. Procédé suivant l'une ou l'autre des revendications 1 à 4, caractérisé en ce que l'on mesure la dite distance en détectant la position instantanée de la surface en amont et aussi près que possible du dit racleur, au moyen d'au moins un capteur approprié.

6. Procédé suivant l'une ou l'autre des revendications 1 à 5, caractérisé en ce que l'on utilise un dispositif comportant un arbre rotatif (1) pourvu à une extrémité d'au moins un racleur (4) destiné à entrer en contact avec la surface à nettoyer, et dans lequel :

(a) l'arbre (1) est creux;

(b) l'arbre (1) porte, à la dite extrémité, un organe mobile (2), pouvant pivoter par rapport à l'arbre (1), et portant le racleur (4);

(c) dans l'arbre creux (1) est logée une tige (7), mobile en direction longitudinale qui prend appui par une extrémité sur la face arrière de l'organe mobile (2) et par son autre extrémité sur un support élastique (8), de préférence logé dans l'arbre creux (1);

(d) il est prévu des moyens (11) de réglage de l'effort longitudinal appliqué à la tige (7) par le support élastique (8).

0147885

Fig. 1

Fig. 3

Fig. 2

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int Cl 4) |
|---|---|---|---|
| A | DE-A-2 911 578 (FUTEC INC.)<br>* Revendications 1,6 * | 1,6 | B 22 D 11/16<br>G 01 K 1/16<br>G 01 K 1/14<br>G 01 J 5/04 |
| A | FR-A-2 292 960 (CENTRE DE RECHERCHES METALLURGIQUES)<br>* Revendication 3 * | 1 | |
| A | DE-A-3 009 849 (CENTRE DE RECHERCHES METALLURGIQUES)<br>* Revendications 1,5 * | 1,6 | |
| D,A | BE-A- 840 761 (CENTRE DE RECHERCHES METALLURGIQUES)<br>* Revendications 1,6 * | 1,6 | |

DOMAINES TECHNIQUES RECHERCHES (Int. Cl.4)

G 01 K 1/00
G 01 J 5/00
B 22 D 11/00
G 01 K 13/00

Le présent rapport de recherche a ete etabli pour toutes les revendications

| Lieu de la recherche BERLIN | Date d'achèvement de la recherche 28-02-1985 | Examinateur GOLDSCHMIDT G |
|---|---|---|